# EUROPEAN PATENT SPECIFICATION

(11) **EP 2 838 761 B1**
(45) Date of publication and mention of the grant of the patent: **18.09.2019**
(21) Application number: 13718430.5
(22) Date of filing: 01.04.2013
(51) Int. Cl.: B60Q 1/068, B60Q 1/28, F21S 43/19, F21S 43/14, F21S 45/47, F21S 45/48

(54) **OPTICALLY ADJUSTABLE LIGHT MODULE**
OPTISCH EINSTELLBARES LICHTMODUL
MODULE LUMINEUX OPTIQUEMENT RÉGLABLE

(30) Priority: 20.04.2012 US 201213452049
(43) Date of publication of application: 25.02.2015
(73) Proprietor: Tungsram Operations Kft, Budapest, 1044 (HU)
(72) Inventor: ABAI, Robert, 1044 Budapest (HU); BAKO, Zoltan, 1044 Budapest (HU); MUDRA, Istvan, 1044 Budapest (HU); GALLAI, Jozsef, 1044 Budapest (HU); MOLNAR, Imre, 1044 Budapest (HU); PINTER, Peter, 1044 Budapest (HU)
(74) Representative: Rüger Abel
(86) International application number: PCT/US2013/034798
(87) International publication number: WO 2013/158359

(56) References cited:
- EP-A1- 1 842 724
- EP-A1- 1 935 715
- JP-A- S6 364 202
- JP-A- 2006 117 164
- JP-A- 2007 203 857
- JP-U- H0 216 504
- US-A- 5 833 346
- US-B1- 6 338 567

## Description

### Field of the Invention:

This disclosure pertains to an optically adjustable light module and, in particular, to an optically adjustable LED light module for motor vehicles.

### Background of the Invention:

Motor vehicles include various lights that provide exterior illumination or increase visibility of the vehicle to others. These lights can include several lighting functions, among others daytime running lamps (DRLs). DRLs purposely provide lights used during daytime to alert oncoming drivers enhancing car conspicuity. Usually the DRLs are activated with the operation of the car and deactivated/dimmed to position lights when other front lighting functions are activated. Those can be incorporated in new cars, but a need exists to mount them on existing cars.

DRL light modules used in motor vehicles may have a plurality of light sources such as LEDs. The light sources are positioned/directed in such a way that the overall projected light requirements relative to the car longitudinal axis are met. This is ensured by defining an optical axis for the module, ensuring projected light requirements relative to the optical axis, and setting the optical axis parallel with the car axis during installation.

Car fronts where the DRL modules should be attached vary in shape and angle relative to the car axis. Therefore, attaching DRL modules to existing cars can be difficult, as current DRL module designs feature preset optical axis - module axis angles. As a consequence different designs regarding the light module angle are needed for different car front shapes.

JP 2007 203857 A discloses an optically adjustable light module comprising a plurality of light sources each of which has an optical axis and at least two bodies each of which is rotatable about a rotational axis. Each light source is connected to one of the bodies and a connecting arm connects the bodies together. A housing receives the light sources, the bodies and the arm in an interior thereof. A direction adjuster in the form of an actuator is disposed at an exterior of the housing and has an operating shaft which is operatively coupled to the connecting arm. Movement of the operating shaft by the actuator also moves the connecting arm which rotates the bodies of the light sources such that the optical axis of the light sources may be adjusted simultaneously.

The DRL light module of this disclosure solves the above-mentioned problem in that it can be fit to existing car fronts with different shapes, the optical axis adjusted to be parallel with the car axis.

### Brief Description of the Invention:

Present invention provides an optically adjustable light module as defined in claim 1 and comprising at least two light sources each of which has an optical axis. There are at least two bodies each of which is rotatable about a rotational axis. Each light source is connected to one of the bodies. An arm connects the bodies together. A housing receives the light sources, the bodies and the arm in an interior thereof. Fasteners each connect one of the bodies to the housing along the rotational axis. A direction adjuster is disposed at an exterior of the housing. The interior of the housing is sealed against moisture. When the fasteners are loosened somewhat, movement of the direction adjuster rotates a first one of the bodies, which, via movement of the arm, rotates a second one of the bodies such that the optical axis of the light source of the first body is moved simultaneously and in parallel with the optical axis of the light source of the second body and parallel with a longitudinal reference axis (e.g., a longitudinal axis of a motor vehicle). When the fasteners are tightened, the bodies are secured in place and the position of the optical axes is fixed.

Referring to specific features of the invention, the light source can comprise a light emitting diode. The light source can comprise a reflector and/or lens system (also known as a secondary optic) and a light emitting diode positioned such that light from the light emitting diode is reflected by the reflector and/or lens system. The light module can be configured and arranged to be mounted to a motor vehicle and, in particular, can be a daytime running light for the motor vehicle. Printed circuit boards can each be connected to one of the bodies. The light emitting diode can be electrically connected to one of the printed circuit boards. Thermally conductive material can be disposed between each of the printed circuit boards and each of the bodies. The direction adjuster can include alignment indicia, wherein the direction adjuster is positioned and arranged such that the alignment indicia is aligned with the optical axis.

In addition, the direction adjuster can rotate in a fixed relation with the light source; for example, the direction adjuster can directly engage the first body so to rotate in a fixed relation with the first body. Thermally conductive material can be disposed between each of the bodies and the housing. Heat transfer fins can be disposed in thermal communication with the housing, such as being formed as part of the housing. Each body and the housing can be formed of thermally conductive material. Any of the detailed features discussed in the Detailed Description of the Invention below can be used in this first aspect in any combination.

The direction adjuster can include a vertically extending stem portion that engages the first body, comprising a gasket supported by the housing between the direction adjuster and the first body, the gasket being disposed around the vertically extending portion.

A light transmitting (e.g., clear) cover can be connected to a front of the housing.

Many additional features, advantages and a fuller understanding of the invention will be had from the accompanying drawings and the Detailed Description of the Invention that follows. It should be understood that the above Brief Description of the Invention describes the invention in broad terms while the following Detailed Description of the Invention describes the invention more narrowly and presents specific embodiments that should not be construed as necessary limitations of the broad invention as defined in the claims.

### Brief Description of the Drawings:

Figure 1 is a perspective view of a light module made according to this disclosure;
Figures 2 and 3 are exploded perspective views of the light module of Figure 1;
Figures 4 and 5 are top plan views of the bodies to which light sources are connected removed from the housing of the light module, disposed in a first position and in a second rotated position, respectively, throughout which the optical axes are kept parallel to each other;
Figure 6 is a top plan view of the light module of Figure 1;
Figure 7 is a cross-sectional view as seen from the cutting plane 7-7 in Figure 6;
Figure 8 is a cross-sectional view as seen from the cutting plane 8-8 in Figure 6; and
Figure 9 is a rear, perspective view of the bodies, arm and direction adjuster.

### Detailed Description of the Invention:

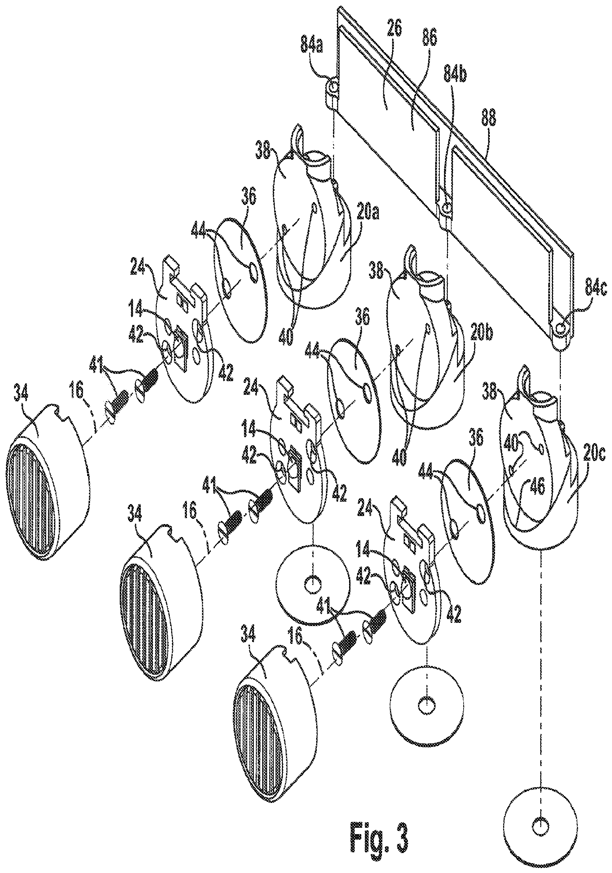

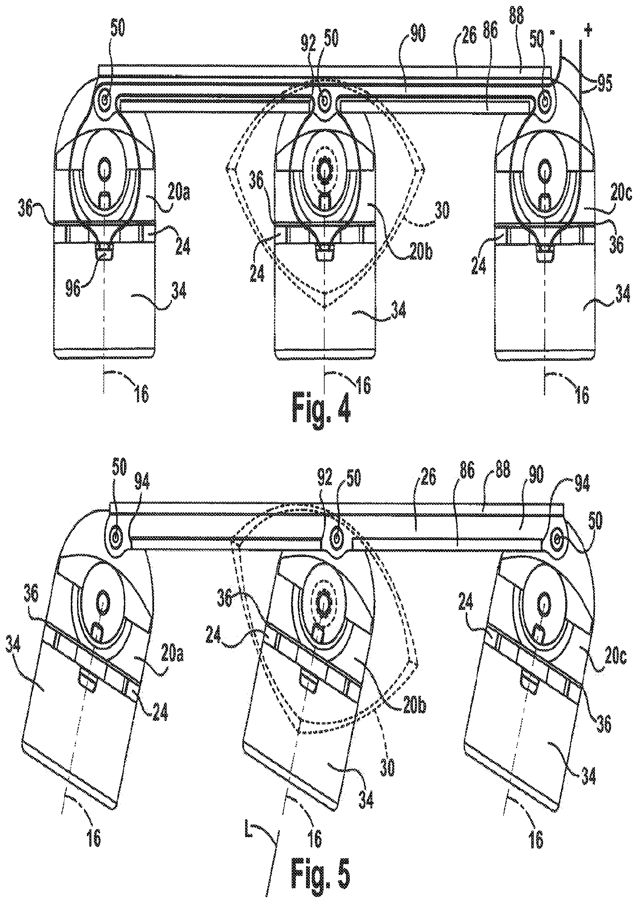

An optically adjustable light module 10 comprises a housing 12 and at least two light sources (e.g., including light emitting diodes 14) each of which has an optical axis shown generally at 16 (Fig. 3), which are disposed in an interior 18 of the housing. Although this section refers to at least two light sources it should be appreciated that the light module can include only a single light source (e.g., one LED 14). At least two bodies 20 are disposed in the interior of the housing, each of the bodies being rotatable about a rotational axis R. In the figures three bodies 20 are shown including a central body 20b and two outer bodies 20a, 20c. The bodies 20 function so as to support and enable rotation of the light emitting diodes 14. The bodies 20 also function as heat sinks to dissipate the heat generated from the light emitting diodes (LEDs) 14 to the housing 12. The housing 12 dissipates heat as well, through fins 22 of the housing. The bodies 20 are made of thermally conductive material, for example, aluminum. Printed circuit boards (PCBs) 24 are each connected to one of the bodies 20. Each light emitting diode 14 is electrically connected to one of the printed circuit boards 24. An arm 26 connects the bodies 20 together. The housing 12 receives the light emitting diodes 14, the printed circuit boards 24, the bodies 20 and the arm 26 in the interior 18 thereof. The interior 18 of the housing is sealed against moisture. Threaded fasteners 28 each connect one of the bodies 20 to the housing 12 along the rotational axis R. A direction adjuster 30 is disposed at an exterior 32 of the housing 12. The direction adjuster 30 directly engages one of the bodies 20 (e.g., the central body 20b) so to rotate in a fixed relation with the central body. Movement of the direction adjuster 30 rotates the central body 20b, which, via movement of the arm 26, rotates the outer bodies 20a, 20c such that the optical axis 16 of the light emitting diode 14 of the central body 20b is moved simultaneously and in parallel with the optical axes 16 of the light emitting diodes 14 of the outer bodies 20a, 20c until all of the optical axes are moved to be parallel with a longitudinal reference axis L of a motor vehicle (Fig. 5).

The light source can comprise a reflector and/or lens system 34 (also known as a secondary optic). The light emitting diode 14 is positioned such that light from the light emitting diode is reflected by the reflector and/or lens system 34.

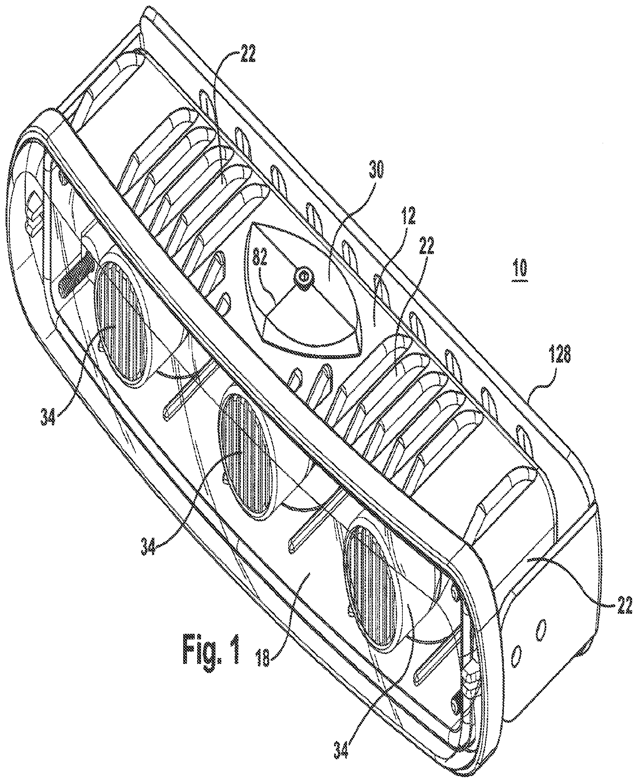

Each PCB 24 is connected to one of the bodies 20. Each light emitting diode 14 is electrically connected to one of the PCBs 24 such as by soldering. The term, printed circuit board, may refer to any of a rigid metal-clad printed circuit board, a rigid polymeric printed circuit board, a flexible metal-clad printed circuit film, and a flexible polymeric printed circuit film. Any of these PCB variations may be secured to the body with any one or more of a threaded fastener, grease, pressure-sensitive adhesive (e.g. tape), or cured adhesive (e.g. epoxy). The interface between the PCB 24 and the body 20, i.e. the grease or adhesive, preferably has good thermal conductivity properties, low thermal contact resistance to effectively dissipate the heat in the LEDs to the heat sink body, and high electrical contact resistance to electrically insulate the PCB from the heat sink body. A thermally conductive pad 36 as shown in Fig. 1 can be disposed between the PCB 24 and the body 20.

The bodies 20 each include a flat front face 38 including tapped openings 40 therein. Threaded fasteners 41 extend into openings 42 in the PCB 24, through openings 44 of the pad 36 and are threaded into the interiorly threaded openings 40 of the body so as to secure the PCBs 24 and the pads 36 to the bodies 20. A base portion 46 of the body 20 (only one of which is labeled in Fig. 3) receives the cup shaped secondary optic element (reflector and/or lens 34). The secondary optic 34 covers the LED 14 and can be fastened to the PCB 24 over the LED 14 using pressure sensitive adhesive fastened to the secondary optic and/or using glue, for example. A shelf 48 is formed at the back of the body 20 and includes a raised pin 50 to be discussed later. A tapped vertical opening 52 is formed in a lower portion of each body 20. Each such opening is aligned with an opening 54 in the housing 12. The fasteners 28 each extending along the rotational axis R pass through the opening 54 in the housing 12 and are threaded to the lower portion of the body into opening 52. There is a gasket between each fastener 28 and the housing 12, which can be a gasket integrally formed with the fastener. For example, each fastener can include a gasket that includes a metal outer ring portion and interior polymeric gasket portion. On the other hand a separate polymeric gasket 56 can be used. The lower fasteners 28 and their gaskets 56 seal the bottom of the housing 12 against moisture.

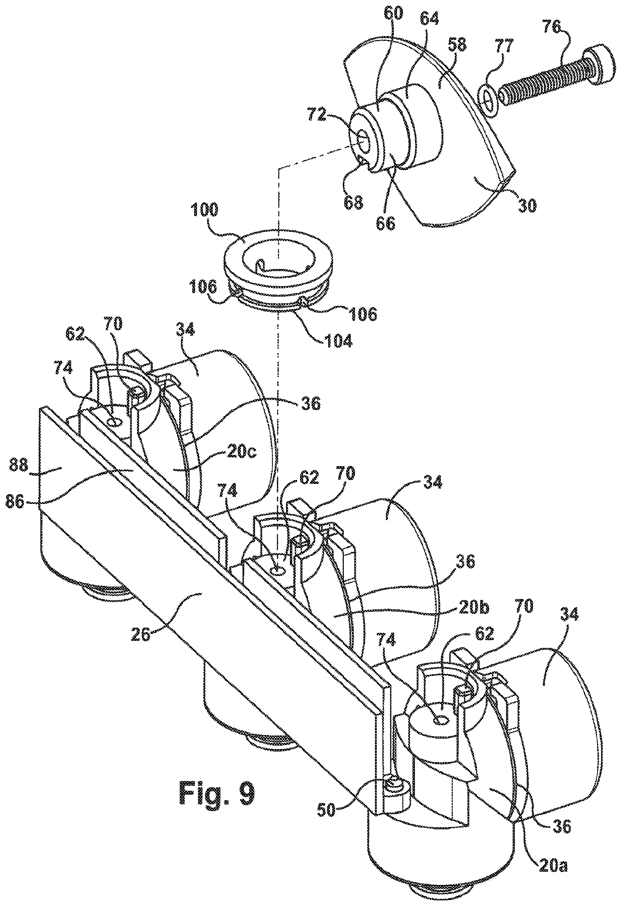

The direction adjuster 30 can directly engage the central body 20b, for example, so to rotate in a fixed relation with the central body. The direction adjuster 30 can include a horizontally extending dial portion 58. A vertically extending stem portion 60 of the direction adjuster 30 engages a circular seat 62 of the central body 20b. The stem portion 60 is generally cylindrical and has an upper larger diameter portion 64 and a lower smaller diameter portion 66 (Fig. 9). The smaller diameter portion 66 includes a recess 68 that engages a stop member 70 formed on the seat 62 of the body 20, preventing relative rotation between the direction adjuster 30 and the body 20. The stem portion 60 includes a vertical opening 72 therethrough aligned with a vertical opening 74 in the upper portion of the body 20. The opening 74 in the body 20 can be tapped with internal threads so as to engage threads of a fastener 76 retained in the stem portion 60 of the direction adjuster 30. The head 78 of the fastener 76 can be retained in a countersink 80 in the upper surface of the direction adjuster 30. A polymeric gasket 77 inhibits water moving into the unit along the threads. It will be appreciated that each of the bodies 20a, 20b, 20c can have the same structural features (e.g., seat 62, stop member 70 and opening 74) so that the direction adjuster 30 could engage an upper portion of any of the bodies to directly control rotation of that body. Advantageously, only one type of body needs to be made with one diecast tooling. The direction adjuster 30 can include alignment indicia 82, wherein the direction adjuster is positioned and arranged such that the alignment indicia is aligned with the optical axes 16 of all of the LEDs 14.

The arm 26 connects all of the bodies 20 together so that rotation of one of the bodies rotates all of the bodies by the same extent. The pin 50 at the back of each body 20 engages a collar 84 formed on the arm 26. There is one collar for each pin spaced apart from each other along a longitudinal axis of the arm. Two collars 84a, 84c (Fig. 3) are disposed at ends of the arm 26 and a collar 84b is disposed at a central portion of the arm. The pins 50 can rotate in the collars 84 of the arm when the arm moves to rotate the bodies. Because each body 20 is limited to rotation about the rotational axis R and the bodies 20 are all fixed to the arm 26 at the same rear location of the body, side-to-side movement of the arm 26 rotates each of the bodies to the same extent, maintaining all of the optical axes 16 parallel to each other throughout the range of motion of the arm. The arm 26 is generally U-shaped and includes front 86 and rear 88 upstanding portions forming a channel 90 between them. There is a central gap 92 between the front upstanding portions of the arm near the central collar 84b and spaces 94 in the front upstanding portions on either end of the arm. The LEDs 14 are wired together in parallel or in series. As seen in only Fig. 4 for clarity, the electrical wiring 95 extends from the PCB 24 through an upper opening 96 formed in the secondary optic 34 into the gap or spaces 92, 94 in the front upstanding portion 86 and longitudinally along the channel 90 between the front 86 and back 88 upstanding portions of the arm 26 and out of an opening in the housing (not shown). By this arrangement the wiring 95 cannot be seen looking through the front of the module and is prevented from kinking upon movement of the arm and rotation of the bodies.

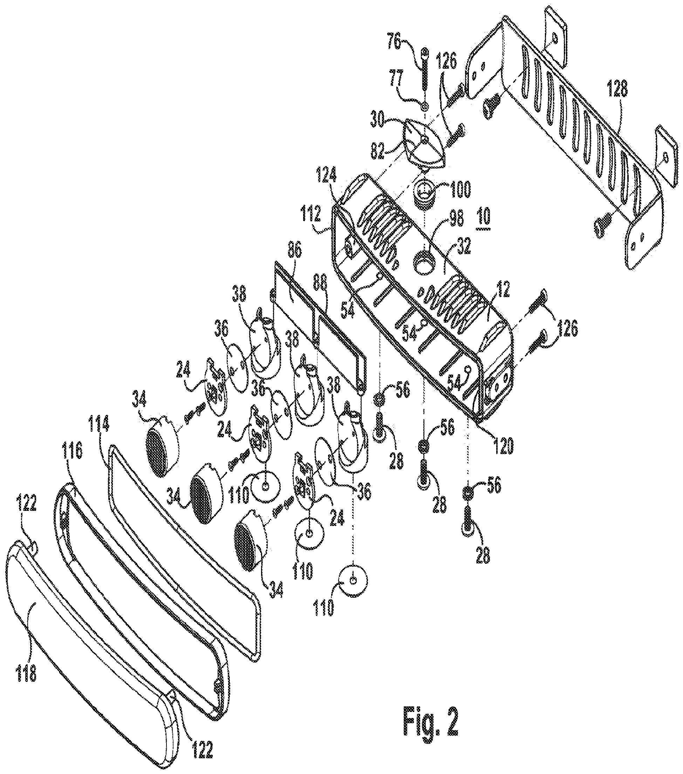

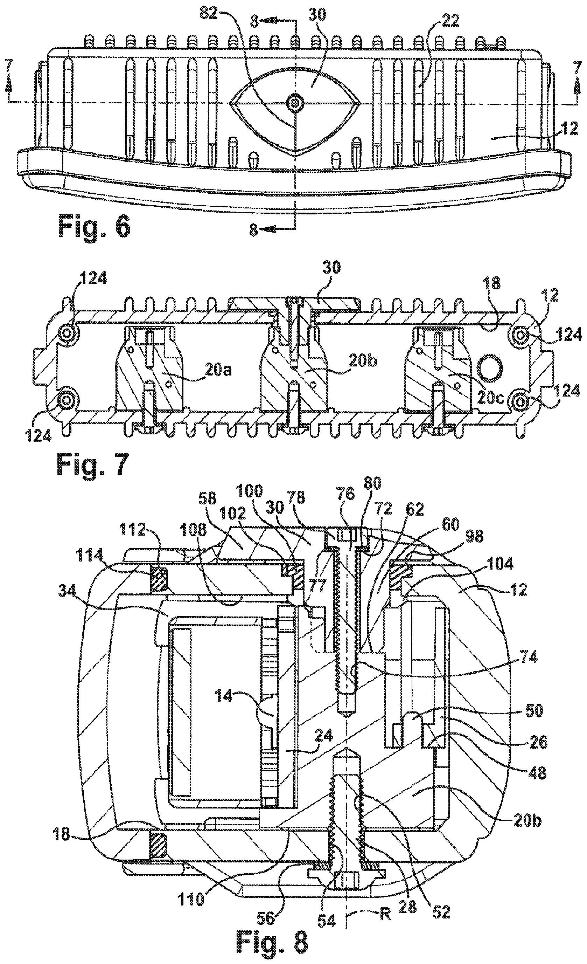

The housing 12 includes an opening 98 (Figs. 2 and 8) above one of the bodies which, as shown in the figures is above the central body 20b, for example. A polymeric gasket 100 is supported in the opening 98 of the housing between the direction adjuster 30 and the central body 20b, the gasket being disposed around the upper portion of the stem portion 60. The gasket 100 is supported in a seat 102 of the housing. The gasket 100 includes a lower flange 104 that extends beyond the smallest diameter portion of the opening 98 in the housing. The gasket includes slits 106 at a lower end that enables the flange to deform to fit through the opening 98 into position against an inner surface 108 of the housing.

Thermally conductive material (e.g., pads 110) can be disposed between each of the bodies 20 and the housing 12. The housing can be formed of thermally conductive material, for example, aluminum.

Around a perimeter of the front of the housing 12 is a recess 112 that receives a gasket 114. An optional decor ring 116 may extend around the front exterior of the housing for aesthetic purposes. A clear plastic or glass cover 118 may engage the inside of the decor ring and covers a front opening 120 of the housing and includes threaded protrusions 122. The housing 12 also includes protrusions 124 that are aligned with the threaded protrusions 122 of the cover. Threaded fasteners 126 extend from a back of the housing through the protrusions 124 of the housing and into the threaded protrusions 124 of the cover to secure the cover 118 to the housing 12. Applying the force to the cover by tightening the fasteners against the gasket 114 seals the front of the housing against moisture. Other ways of fastening the cover to the housing may also be used such as a snap fit or also simple adhesive that can both support (without screws) and seal the plastic cover. The cover and decor ring may be made into a single component.

The secondary optic can include a reflector only, a lens only or a reflector and a lens. Figs. 2 and 3 show a lens only. The commercially available lens is a plastic composite material that is available, as shown, in one piece. The LED 14 with its associated PCB 24, and the reflector and/or lens system 34, form the light source or lamp. The LED 14 is centered inside the secondary optics 34. Driver electronics (not shown) are in electrical contact with the wiring extending from the PCBs. The LEDs are connected in series or in parallel. The driver electronics can be either incorporated into the module or be an external one. Once they are in, a possible place can be the back side of the housing, arranged in a way that still allows subsequent optical alignment.

When it is desired to adjust the optical axes 16 of the LEDs 14 of the light module 10, the front light transmitting cover 118 can remain attached. All three of the lower screws 28 and the one upper screw 76 are loosened somewhat. Then, the direction adjuster 30 is rotated to the left or right, rotating the stem portion 60 and the central body 20b connected thereto, about the rotational axis R. At this time the upper screw 76 and lower screws 28 can remain in a fixed position on the body or they can move. They are loose, so can either move or stay in position. Since the arm 26 connects the central body 20b to the outer bodies 20a, 20c, rotation of the central body 20b about the rotational axis R causes the arm 26 to simultaneously rotate the bodies 20a, 20c about their rotational axes and all optical axes 16 of the light sources parallel to each other and in a direction that the direction adjuster was moved. That is, the pins 50 at the rear portion of the bodies 20 rotate relative to the collars 84 of the arm 26 as the arm is moved from side to side, rotating the bodies 20a, 20c left or right about their rotational axes depending on how the direction adjuster is rotated. The indicia 82 on the direction adjuster 30 is aligned parallel to the optical axes 16. The indicia 82 and optical axes are moved until they are parallel to the motor vehicle axis (the longitudinal axis L of the motor vehicle which may be exaggerated in Fig. 5). Once this adjustment has been made, the three lower screws 28 are tightened, securing the bodies 20 (light sources) in place and fixing the position of the optical axes 16 as desired. The bottom of the housing is now sealed against moisture. The upper screw 76 is also tightened, providing the seal about the direction adjuster 30, which seals the top of the housing against moisture.

The light module 10 described above, is configured and arranged to be mounted to a motor vehicle (e.g., car, truck or bus), in particular as a daytime running light for the motor vehicle. The light module is designed in a way that it can be fit to a wide range of car/truck/bus models. A bracket 128 (Figs. 1 and 2) can be used to fasten the light module to the vehicle and can provide vertical adjustment of the light module. Fasteners are shown for fastening the bracket to the vehicle. The housing would be fastened to the bracket by inserting fasteners (not shown) through openings in the sides of the bracket into openings in the sides of the housing. Any number of light sources may be used in the light module of this disclosure. For example, there are at least two of the light sources, in particular, three light sources and, in particular, there are four or more of the light sources.

Many modifications and variations of the invention will be apparent to those of ordinary skill in the art in light of the foregoing disclosure. Therefore, it is to be understood that, within the scope of the appended claims, the invention can be practiced otherwise than has been specifically shown and described.

## Claims

1. An optically adjustable light module comprising:
at least two light sources (14) each of which has an optical axis (16);
at least two bodies (20) that are rotatable about a rotational axis (R1), each said light source (14) being connected to one of said bodies (20);
an arm (26) connecting said bodies (20) together;
a housing (12) that receives said light sources (14), said bodies (20) and said arm (26) in an interior (18) thereof:
a direction adjuster (30) disposed at an exterior (32) of said housing (12);
**characterized in that** the light module further comprises :
fasteners (28) each connecting one of said bodies (20) to said housing (12) along the rotational axis (e); and
the interior (18) of said housing (12) being sealed against moisture;
wherein, when the fasteners (28) are loosened somewhat, movement of said direction adjuster (30) rotates a first one of said bodies (20), which, via movement of said arm (26), rotates a second one of said bodies (20) such that the optical axis (16) of said light source (14) of said first body (20) is moved simultaneously and in parallel with the optical axis (16) of said light source (14) of said second body (20) until the optical axes (16) are parallel with a longitudinal reference axis (L), and wherein, when the fasteners (28) are tightened, the bodies (20) are secured in place and the position of the optical axes (16) is fixed.

2. The light module of claim 1, wherein each of said light sources (14) comprises a light emitting diode.

3. The light module of claim 2, wherein each of said light sources (14) comprises a reflector and/or lens system (34) and said light emitting diode (14) is positioned such that light from said light emitting diode (14) is reflected by said reflector and/or lens system (34).

4. The light module of any of claims 1 to 3, wherein said direction adjuster (30) engages said first body (20) so to rotate in a fixed relation with said first body (20).

5. The light module of any of claims 1 to 4, being configured for mounting to a motor vehicle.

6. The light module of claim 5, which is a daytime running light for said motor vehicle.

7. The light module of any preceding claim, comprising thermally conductive material (110) disposed between each of said bodies (20) and said housing (12).

8. The light module of any preceding claim, comprising printed circuit boards, (24) each connected to one of said bodies (20), wherein each said light source (14) includes a light emitting diode electrically connected to one of said printed circuit boards (24).

9. The light module of claim 8, comprising thermally conductive material (36) disposed between said printed circuit boards (26) and said bodies (20).

10. The light module of any preceding claim, wherein said direction adjuster (30) includes alignment indicia (82), said direction adjuster (30) being positioned and arranged such that said alignment indicia (82) is aligned parallel to all of said optical axes (16).

11. The light module of any preceding claim, comprising heat transfer fins (22) disposed in thermal communication with said housing (12).

12. The light module of any preceding claim, wherein said direction adjuster (30) includes a vertically extending stem portion (60) that engages said first body (20), comprising a gasket (100) supported by said housing (12) between said direction adjuster (30) and said first body (20), said gasket (100) being disposed around said stem portion (60).

## Patentansprüche

1. Optisch einstellbares Leuchtmodul, das aufweist:
wenigstens zwei Lichtquellen (14), von denen jede eine optische Achse (16) aufweist;
wenigstens zwei Körper (20), die um eine Drehachse (R1) verdrehbar sind, wobei jede Lichtquelle (14) mit einem der Körper (20) verbunden ist;
einen Arm (26), der die Körper (20) miteinander verbindet;
ein Gehäuse (12), das die Lichtquellen (14), die Körper (20) und den Arm (26) in seinem Innenraum (18) aufnimmt;
eine Richtungseinstellvorrichtung (30), die an einer Außenseite (32) des Gehäuses (12) angeordnet ist;
**dadurch gekennzeichnet, dass** das Leuchtmodul ferner aufweist:
Befestigungsmittel (28), die jeweils einen der Körper (20) mit dem Gehäuse (12) entlang der Drehachse (e) verbinden; und
wobei der Innenraum (18) des Gehäuses (12) gegen Feuchtigkeit abgedichtet ist;
wobei, wenn die Befestigungsmittel (28) etwas gelockert werden, eine Bewegung der Richtungseinstellvorrichtung (30) einen ersten der Körper (20) verdreht, was über eine Bewegung des Arms (26) einen zweiten der Körper (20) derart verdreht, dass die optische Achse der Lichtquelle (14) des ersten Körpers (20) gleichzeitig mit und parallel zu der optischen Achse (16) der Lichtquelle (14) des zweiten Körpers (20) bewegt wird, bis die optischen Achsen (16) zu einer Längsbezugsachse (L) parallel verlaufen, und wobei, wenn die Befestigungsmittel (28) festgezogen werden, die Körper (20) in Stellung gesichert sind und die Position der optischen Achsen (16) fixiert ist.

2. Leuchtmodul nach Anspruch 1, wobei jede der Lichtquellen (14) eine Leuchtdiode aufweist.

3. Leuchtmodul nach Anspruch 2, wobei jede der Lichtquellen (14) einen Reflektor und/oder ein Linsensystem (34) aufweist und die Leuchtdiode (14) derart positioniert ist, dass Licht von der Leuchtdiode (14) durch den Reflektor und/oder das Linsensystem (34) reflektiert wird.

4. Leuchtmodul nach einem beliebigen der Ansprüche 1 bis 3, wobei die Richtungseinstellvorrichtung (30) mit dem ersten Körper (20) derart in Eingriff steht, dass sie sich in einer festen Beziehung zusammen mit dem ersten Körper (20) dreht.

5. Leuchtmodul nach einem beliebigen der Ansprüche 1 bis 4, das zur Montage an einem Kraftfahrzeug eingerichtet ist.

6. Leuchtmodul nach Anspruch 5, das eine Tagfahrleuchte für das Kraftfahrzeug ist.

7. Leuchtmodul nach einem beliebigen vorhergehenden Anspruch, das ein wärmeleitendes Material (110) aufweist, das zwischen jedem der Körper (20) und dem Gehäuse (12) angeordnet ist.

8. Leuchtmodul nach einem beliebigen vorhergehenden Anspruch, das gedruckte Leiterplatten (24) aufweist, die jeweils mit einem der Körper (20) verbunden sind, wobei jede Lichtquelle (14) eine Leuchtdiode enthält, die mit einer der gedruckten Leiterplatten (24) elektrisch verbunden ist.

9. Leuchtmodul nach Anspruch 8, das ein wärmeleitendes Material (36) aufweist, das zwischen den gedruckten Leiterplatten (26) und den Körpern (20) angeordnet ist.

10. Leuchtmodul nach einem beliebigen vorhergehenden Anspruch, wobei die Richtungseinstellvorrichtung (30) eine Ausrichtungsmarkierung (82) enthält, wobei die Richtungseinstellvorrichtung (30) derart positioniert und eingerichtet ist, dass die Ausrichtungsmarkierung (82) parallel zu allen der optischen Achsen (16) ausgerichtet ist.

11. Leuchtmodul nach einem beliebigen vorhergehenden Anspruch, das Wärmeübertragungsrippen (22) aufweist, die in thermischer Verbindung mit dem Gehäuse (12) angeordnet sind.

12. Leuchtmodul nach einem beliebigen vorhergehenden Anspruch, wobei die Richtungseinstellvorrichtung (30) einen sich vertikal erstreckenden Schaftabschnitt (60) enthält, der mit dem ersten Körper (20) in Eingriff steht, eine Dichtung (100) aufweisend, die durch das Gehäuse (12) zwischen der Richtungseinstellvorrichtung (30) und dem ersten Körper (20) gehalten ist, wobei die Dichtung (100) um den Schaftabschnitt (60) herum angeordnet ist.

## Revendications

1. Module feu optiquement réglable, comprenant :
au moins deux sources de lumière (14), dont chacune a un axe optique (16) ;
au moins deux corps (20) qui peuvent tourner autour d'un axe de rotation (R1), chacune desdites sources de lumière (14) étant reliée à l'un desdits corps (20) ;
un bras (26) reliant lesdits corps (20) ensemble ;
un boîtier (12) qui reçoit lesdites sources de lumière (14), lesdits corps (20) et ledit bras (26) dans un intérieur (18) de celui-ci ;
un dispositif de réglage de direction (30) disposé au niveau d'un extérieur (32) dudit boîtier (12) ;
**caractérisé en ce que** le module feu comprend en outre :
des éléments de fixation (28) reliant chacun l'un desdits corps (20) audit boîtier (12) le long de l'axe de rotation (e) ; et
l'intérieur (18) dudit boîtier (12) étant étanche à l'humidité ;
dans lequel, quand les éléments de fixation (28) sont quelque peu desserrés, un mouvement dudit dispositif de réglage de direction (30) fait tourner un premier desdits corps (20), ce qui, par l'intermédiaire d'un mouvement dudit bras (26), fait tourner un deuxième desdits corps (20) de manière que l'axe optique (16) de ladite source de lumière (14) dudit premier corps (20) soit déplacé simultanément et en parallèle avec l'axe optique (16) de ladite source de lumière (14) dudit deuxième corps (20) jusqu'à ce que les axes optiques (16) soient parallèles à un axe de référence longitudinal (L), et dans lequel, quand les éléments de fixation (28) sont serrés, les corps (20) sont maintenus en place et la position des axes optiques (16) est fixée.

2. Module feu selon la revendication 1, dans lequel chacune desdites sources de lumière (14) comprend une diode électroluminescente.

3. Module feu selon la revendication 2, dans lequel chacune desdites sources de lumière (14) comprend un système de réflecteur et/ou de lentille (34) et ladite diode électroluminescente (14) est positionnée de manière que la lumière provenant de ladite diode électroluminescente (14) soit réfléchie par ledit système de réflecteur et/ou de lentille (34).

4. Module feu selon l'une quelconque des revendications 1 à 3, dans lequel ledit dispositif de réglage de direction (30) est en prise avec ledit premier corps (20) de façon à tourner en relation fixe avec ledit premier corps (20).

5. Module feu selon l'une quelconque des revendications 1 à 4, qui est configuré en vue d'être monté sur un véhicule à moteur.

6. Module feu selon la revendication 5, qui est un feu de jour pour ledit véhicule à moteur.

7. Module feu selon l'une quelconque des revendications précédentes, comprenant un matériau thermiquement conducteur (110) disposé entre chacun desdits corps (20) et ledit boîtier (12).

8. Module feu selon l'une quelconque des revendications précédentes, comprenant des cartes de circuit imprimé (24), reliées chacune à l'un desdits corps (20), dans lequel chacune desdites sources de lumière (14) comporte une diode électroluminescente électriquement connectée à l'une desdites cartes de circuit imprimé (24).

9. Module feu selon la revendication 8, comprenant un matériau thermiquement conducteur (36) disposé entre lesdites cartes de circuit imprimé (26) et lesdits corps (20).

10. Module feu selon l'une quelconque des revendications précédentes, dans lequel ledit dispositif de réglage de direction (30) comporte un repère d'alignement (82), ledit dispositif de réglage de direction (30) étant positionné et agencé de manière que ledit repère d'alignement (82) soit aligné parallèle à tous lesdits axes optiques (16).

11. Module feu selon l'une quelconque des revendications précédentes, comprenant des ailettes de transfert de chaleur (22) disposées en communication thermique avec ledit boîtier (12).

12. Module feu selon l'une quelconque des revendications précédentes, dans lequel ledit dispositif de réglage de direction (30) comporte une partie tige (60) s'étendant verticalement qui est en prise avec ledit premier corps (20), comprenant un joint d'étanchéité (100) supporté par ledit boîtier (12) entre ledit dispositif de réglage de direction (30) et ledit premier corps (20), ledit joint d'étanchéité (100) étant disposé autour de ladite partie tige (60).
